# EUROPÄISCHE PATENTSCHRIFT

(11) **EP 1 837 110 B1**
(45) Veröffentlichungstag und Bekanntmachung des Hinweises auf die Patenterteilung: **08.10.2008**
(21) Anmeldenummer: 06005715.5
(22) Anmeldetag: 21.03.2006
(51) Int. Cl.: B23D 47/04, B27B 27/08

(54) **Anschlagschiene mit doppelten, verfahrbaren Längsanschlägen**
Positioning rail with double and movable longitudinal guide fence
Réglette à butée avec un guidage longitudinal double et mobile

(43) Veröffentlichungstag der Anmeldung: 26.09.2007
(73) Patentinhaber: Wilhelm Altendorf GmbH & Co. KG, D-32429 Minden (DE)
(72) Erfinder: Altendorf, Tom, 32423 Minden (DE); Domurath, Michael, 32469 Petershagen (DE)
(74) Vertreter: Eisenführ, Speiser & Partner

(56) Entgegenhaltungen:
- EP-A- 0 743 120
- DE-A1- 10 253 011
- US-A1- 2004 123 712

## Beschreibung

Die Erfindung betrifft eine Anschlagschiene für eine Werkzeugmaschine, insbesondere eine Formatkreissäge, umfassend: eine Befestigungsvorrichtung die ausgebildet ist, um die Anschlagschiene am Quertisch der Formatkreissäge oberhalb einer Werkstückauflagefläche des Quertisches zu befestigen, ein Drehlager, das ausgebildet ist, um die Anschlagschiene relativ zu der Schnittebene zu verschwenken, eine erste Anlagefläche, die sich in Längsrichtung der Anschlagschiene erstreckt und senkrecht zur Werkstückauflagefläche des Quertischs ausgerichtet ist, eine erste Längsanschlagfläche, die beweglich und arretierbar entlang der Längsrichtung der Anschlagschiene geführt ist und eine zweite Längsanschlagsfläche, die beweglich und arretierbar entlang der Längsrichtung der Anschlagschiene geführt ist.

Solche Anschlagschienen dienen dazu, beispielsweise an Kreissägen die Ausführung rechtwinkliger oder nicht-rechtwinkliger Schnitte an Werkstücken zu ermöglichen, insbesondere abgewinkelte Seitenkanten an Platten oder Gehrungsschnitte an Profilen zu fertigen. Die Anschlagschiene ist bei der Ausführung rechtwinkliger Schnitte in ihrer Längsrichtung parallel zur Drehachse des Sägeblatts ausgerichtet. Wenn beabsichtigt ist, einen Winkel- oder Gehrungsschnitt auszuführen, so wird die Anschlagschiene aus dieser Winkellage um einen entsprechenden, vorbestimmten Winkel verschwenkt und in der verschwenkten Position arretiert. Das Werkstück wird nun mit einer Seitenkante an die Anlagefläche der Anschlagschiene angelegt und in dieser Lage in das Sägeblatt gefahren und der Schnitt ausgeführt. Auf diese Weise wird die Schnittkante in einem Winkel von 90° abzüglich bzw. zuzüglich des Schwenkwinkels der Anschlagschiene ausgeführt. In entsprechender Anwendung kann bei Durchführung eines Schnitts an einem Werkstück ein doppelter Gehrungsschnitt erzielt werden, wiederum mit einen Winkel von 90° abzüglich bzw. zuzüglich des Schwenkwinkels.

Bei der Durchführung solcher Schnitte ist es regelmäßig erforderlich, den Schnitt nicht nur in einem bestimmten Winkel, sondern auch in einem bestimmten Längenmaß durchzuführen. Zu diesem Zweck ist an der Anschlagschiene eine erste Längsanschlagfläche angeordnet, die einen Anschlag in Längsrichtung der Anschlagschiene bereitstellt und somit die Länge des Zuschnitts in Richtung der Anschlagschiene definiert.

Um einen großen Längenbereich für einen Längsanschlag bereitzustellen, ist es aus DE 102 53 011.4-15 bekannt, die erste Längsanschlagsfläche mit einer zweiten Längsanschlagsfläche zu koppeln. Beide Längsanschlagsflächen sind in Längsrichtung der Anschlagschiene voneinander beabstandet und können gemeinsam entlang der Anschlagschiene bewegt werden. Die erste Längsanschlagsfläche dient hierbei für einen ersten Längenbereich, beispielsweise von 5cm bis 150cm und die zweite Längsanschlagsfläche dient für einen sich daran anschließenden Längenbereich von 150cm bis 295cm.

Ein typisches Anwendungsgebiet für Formatkreissägen ist der Zuschnitt von Werkstücken mit einer vorbestimmten Breite und einer vorbestimmten Länge. Typischerweise müssen zu diesem Zweck zwei Schnitte ausgeführt werden, die sich hinsichtlich ihres Längenmaßes unterscheiden. Um eine solche Tätigkeit für mehrere Zuschnitte effizient und wirtschaftlich durchführen zu können, hat der Benutzer bekannter Formatkreissägen einerseits die Möglichkeit, zunächst alle Werkstücke mit dem ersten Längenmaß zuzuschneiden, nachfolgend das zweite Längenmaß einzustellen und die Werkstücke mit diesem zweiten Längenmaß zuzuschneiden. Bei dieser Vorgehensweise wird es aber erforderlich, die Werkstücke mehrmals auf die Werkstückauflagefläche zu heben, was eine körperliche Mehrbelastung für den Benutzer zur Folge hat.

Um diesen Nachteil zu vermeiden, kann der Benutzer auch so vorgehen, dass er an einem Werkstück beide Schnitte unmittelbar aufeinanderfolgend durchführt. In diesem Fall ist es jedoch erforderlich, die Längsanschlagsfläche nach Durchführung des ersten Schnitts zu verstellen, was einen Zeitverlust zur Folge hat.

Die Erfindung hat sich zum einen das Ziel gesetzt, diesen Nachteil zu überwinden und eine wirtschaftlichere und effizientere Möglichkeit bereitzustellen, solche Zuschnitte auszuführen.

Für viele Zuschnittaufgaben ist es praktikabel, die Anschlagschiene so anzuordnen, dass der Benutzer das Werkstück fasst, gegen das Kreissägeblatt führt und hierbei die Anschlagschiene mit dem Werkstück wegdrückt. Für andere Anwendungsfälle ist jedoch eine umgekehrte Anordnung vorteilhaft, d.h. der Benutzer fasst die Anschlagschiene und drückt mit der Anschlagschiene gegen das Werkstück und führt es gegen das Kreissägeblatt. Zu diesem Zweck ist es aus DE 102 53 011.4-15 bekannt, eine Anschlagschiene bereitzustellen, die auf dem Quertisch umgesetzt werden kann und die zwei Anlageflächen auf jeder Seite aufweist, um für beide Arbeitsweisen ausgerüstet zu sein. Diese Anschlagschiene weist zwei T-förmige Längsanschlagklappen auf, an denen die Längsanschlagflächen ausgebildet sind und die verschwenkt werden können, um von der Seite der einen Anlagefläche auf die andere Seite geklappt zu werden, um für beide Positionen der Anschlagschiene Längsanschlagsflächen bereitzustellen. Diese Ausführungsform weist jedoch den Nachteil auf, dass die jeweils nicht benutzte Seite der Längsanschlagklappe, also der nach oben stehende Schenkel des Ts, beim Umsetzen, Abheben oder Aufsetzen eines Werkstücks hinderlich ist, da er in vertikaler Richtung nach oben vorsteht und die Gefahr einer Beschädigung des Werkstücks birgt. Der Erfindung liegt die Aufgabe zugrunde, eine Anschlagschiene bereitzustellen, die diesen Nachteil nicht aufweist.

Die erfindungsgemäße Aufgabe wird gemäß eines ersten Aspekts der Erfindung durch eine Anschlagschiene gemäß Anspruch 1 gelöst.

Die so verbesserte Anschlagschiene ermöglicht es, dass die erste und zweite Längsanschlagfläche unabhängig voneinander mittels des ersten bzw. zweiten Aktuators entlang der Anschlagschiene verschoben werden und folglich zwei unterschiedliche Längenmaße voneinander unabhängig eingestellt werden können. Dabei kann vorgesehen sein, dass sich die beiden Längsanschlagflächen unabhängig voneinander über einen übereinstimmenden Längenbereich verstellen lassen oder dass sich die Verschiebebereiche der beiden Längsanschlagflächen nur teilweise überschneiden oder einander ergänzen, d.h. aneinander anschließen. Der Benutzer der erfindungsgemäßen Anschlagschiene hat somit die Möglichkeit, mittels der Aktuatoren eine bequeme einmalige Positionierung der ersten und zweiten Längsanschlagflächen entsprechend der zwei zuzuschneidenden Maße vorzunehmen und hierauf folgend ein Werkstück in zwei unterschiedlichen Maßen unmittelbar aufeinanderfolgend zuzuschneiden, ohne hierbei zwischendurch das Werkstück von der Werkstückauflage herunternehmen zu müssen und ohne hierbei zwischen den beiden Schnitten eine Verstellung der Längsanschlagflächen vornehmen zu müssen. Auf diese Weise kann eine erheblich höhere Wirtschaftlichkeit und Effizienz beim Zuschnitt von Werkstücken erreicht werden und die körperliche Belastung des Benutzers gleichzeitig verringert werden.

Es ist insbesondere bevorzugt, wenn der erste und zweite Aktuator jeweils eine erste und zweite Gewindespindel umfasst, die unabhängig voneinander in Drehung versetzbar sind. Eine Gewindespindel eignet sich für den ersten und zweiten Aktuator insbesondere deshalb, weil sie die erforderliche Präzision für die Längsverstellung bereitstellt und sich in besonders günstiger Weise an, in oder entlang der Anschlagschiene konstruktiv anordnen lässt. Insbesondere kann die Gewindespindel als Kugelgewindespindel ausgeführt sein, um einen präzisen Lauf bei niedrigem Reibungswiderstand zu erreichen. Die Gewindespindeln werden vorzugsweise durch einen Servomotor angetrieben, um eine präzise Einstellung gewünschter Längenmaße zu ermöglichen.

Dabei ist es insbesondere bevorzugt, wenn die erste und zweite Gewindespindel sich in Längsrichtung der Anschlagschiene erstrecken und zumindest teilweise, vorzugsweise vollständig in einem hohlen Hauptprofil angeordnet sind, welches Bestandteil der Anschlagschiene ist. Bei dieser Ausführungsform sind die Gewindespindeln vor Verschmutzung gesichert und eine gut zu handhabende Anschlagschiene mit handlicher äußerer Kontur wird erzielt.

Weiterhin ist es bevorzugt, die erfindungsgemäße Anschlagschiene fortzubilden durch eine erste Linearführung, mittels der eine erste Längsanschlagklappe, an der die erste Längsanschlagfläche angeordnet ist, relativ zu einem Hauptprofil der Anschlagschiene gelagert ist und eine zweite Linearführung, mittels der eine zweite Längsanschlagklappe, an der die zweite Längsanschlagfläche angeordnet ist, relativ zu dem Hauptprofil der Anschlagschiene gelagert ist. Die solcherart gelagerten Längsanschlagklappen sind mechanisch hoch belastbar und gleichzeitig hochpräzise.

Dabei ist es insbesondere bevorzugt, wenn die zweite Längsanschlagklappe auf einem Verlängerungsprofil angeordnet ist, welches sich in Längsrichtung des Hauptprofils erstreckt und mittels der zweiten Linearführung relativ zu dem Hauptprofil der Anschlagschiene gelagert ist. Auf diese Weise kann ein sehr weiter Längenverstellbereich der beiden Längsanschlagklappen gemeinsam erzielt werden, indem die erste Längsanschlagklappe für die kurzen Längenmaße und die zweite Längsanschlagklappe für die großen Längenmaße eingesetzt wird. Die erfindungsgemäße Anschlagschiene erzielt auch in diesem Fall in den meisten Anwendungen eine Wirtschaftlichkeitssteigerung, da oftmals Platten zugeschnitten werden müssen, die ein langes und ein kurzes Maß aufweisen.

Weiterhin ist es dabei bevorzugt, wenn das Verlängerungsprofil auf einer relativ zur Werkstückauflage geneigt ausgerichteten Fläche des Hauptprofils angeordnet ist, insbesondere auf einer Fläche, die nach außen hin nach unten geneigt verläuft. Diese Ausführungsform hat gleich eine Reihe von Vorteilen. Zum einen ermöglicht diese Ausgestaltung des Hauptprofils eine sehr biege- und verwindungssteife Ausgestaltung des Hauptprofils. Zum anderen kann der Gesamtquerschnitt von Hauptprofil und Verlängerungsprofil durch diese Ausgestaltung in einer kompakten und griffgünstigen Weise ausgeführt werden, da das Hauptprofil im Bereich des Verlängerungsprofils im Querschnitt durch die Neigung verringert wird und somit Raum für das Verlängerungsprofil geschaffen wird. Weiterhin ermöglicht die geneigte Anordnung beispielsweise eine Anordnung einer gut ablesbaren Skala im geneigten Bereich und schließlich wird die Reinigung der erfindungsgemäßen Anschlagschiene von Spänen erleichtert.

Weiterhin ist es bei dieser Ausführungsform insbesondere vorteilhaft, wenn die obere Fläche des Verlängerungsprofil horizontal ausgerichtet ist, um einen homogenen Gesamtquerschnitt von Haupt- und Verlängerungsprofil zu erreichen.

Bei den Ausführungsformen mit Verlängerungsprofil ist es weiterhin bevorzugt, wenn die zweite Längsanschlagklappe in zumindest zwei in Längsrichtung des Verlängerungsprofils voneinander beabstandeten Positionen auf dem Verlängerungsprofil befestigbar ist. Durch diese Ausführungsform wird einerseits ein großer Längenbereich abgedeckt, andererseits wird ermöglicht, dass auch zwei kurze Maße in wirtschaftlicher Weise zugeschnitten werden können, indem für diese Zwecke die zweite Längsanschlagklappe in eine Position auf dem Verlängerungsprofil gesetzt wird, die auch ein kurzes Maß ermöglicht. Dabei kann einerseits vorgesehen sein, dass die zweite Längsanschlagklappe in nur zwei vorbestimmten Positionen auf dem Verlängerungsprofil arretiert werden kann, beispielsweise in einem Abstand von 1m, so dass sich ein anderer Verstellbereich der zweiten Längsanschlagklappe ergibt. Des weiteren kann vorgesehen sein, die Längsanschlagklappe einerseits am Anfang und andererseits am Ende des Verlängerungsprofils anzuordnen, um entweder eine volle Überschneidung der beiden Verstellbereiche der beiden Längsanschlagklappen zu erzielen oder andererseits einen genauen Anschluss des einen Verstellbereichs an den anderen Verstellbereich zu erzielen.

Dabei ist es insbesondere bevorzugt, wenn ein mit der Steuerung der Formatkreissäge koppelbarer Sensor zur Erfassung der Position der zweiten Längsanschlagklappe relativ zum Verlängerungsprofil vorgesehen ist. Auf diese Weise kann beispielsweise einer zentralen Steuerung der Formatkreissäge signalisiert werden, in welcher Position sich die zweite Längsanschlagklappe befindet und auf diese Weise eine Längenanzeige für diese Längsanschlagklappe entsprechend in korrekter Weise ausgegeben werden.

Bei den Ausführungsformen mit Längsanschlagklappen ist es weiterhin bevorzugt, wenn die Befestigungsvorrichtung so ausgebildet ist, dass die Anschlagschiene in einer ersten Position, in der eine erste, sich in Längsrichtung der Anschlagschiene erstreckende und senkrecht zur Werkstückauflagefläche ausgerichtete Anlagefläche als Werkstückanlage dient, und in einer zweiten Position, in der eine zweite, sich in Längsrichtung der Anschlagschiene erstreckende und senkrecht zur Werkstückauflagefläche ausgerichtete Anlagefläche als Werkstückanlage dient, am Quertisch der Formatkreissäge befestigbar ist und dass zumindest eine, vorzugsweise beide Längsanschlagklappen manuell lösbar an der Anschlagschiene befestigbar sind und in einer ersten Position an der Anschlagschiene montiert werden können, in welcher die Längsanschlagklappe als Längsanschlage auf der Seite der ersten Anlagefläche dient, und in einer zweiten Position an der Anschlagschiene montiert werden können, in welcher die Längsanschlagklappe als Längsanschlag auf der Seite der zweiten Anlagefläche dient.

Auf diese Weise wird das eingangs beschriebene Umsetzen der Anschlagschiene von einer ersten in eine zweite Position und retour ermöglicht und hierbei der Nachteil eines hervorstehenden Längsanschlagklappenteils vermieden. Dies wird erfindungsgemäß erreicht, indem die Längsanschlagklappen nicht mehr verschwenkbar ausgestaltet sind, um sie von einer Seite der Anschlagschiene auf die andere Seite zu schwenken, sondern stattdessen in einfacher Weise lösbar sind und umgesteckt werden können. Auf diese Weise wird ermöglicht, dass die Längsanschlagklappen nicht T-förmig ausgestaltet sein müssen, sondern nur L-förmig ausgestaltet sind. Hierdurch wird ein kompakter Aufbau der gesamten Anschlagschiene erreicht und die Gefahr verringert, dass ein Werkstück durch Aufsetzen auf einem hochstehenden Teil der Längsanschlagklappe beschädigt wird.

Dabei ist es besonders bevorzugt, wenn jede Längsanschlagklappe einen Wandbereich aufweist, der auf seiner ersten Wandseite die Längsanschlagsfläche für die erste Position aufweist und auf seiner zweiten, zur ersten rückwärtig angeordneten Wandseite, die Längsanschlagsfläche für die zweite Position aufweist, um einen präzisen Anschlag in beiden Positionen bereitzustellen.

Weiterhin ist es bei den beiden vorgenannten Ausführungsformen bevorzugt, wenn jede Längsanschlagklappe mittels eines Befestigungselements manuell lösbar an der Anschlagschiene befestigbar ist, welches von der ersten und der zweiten Anlagefläche gleich beabstandet ist. Dies erlaubt einen kompakten und konstruktiv einfachen und präzisen Aufbau des Befestigungselements, das beispielsweise durch einen zentralen Bolzen, der durch eine Buchse der Längsanschlagklappe geführt ist, augebildet werden kann. Zudem wird bei dieser Ausführungsform eine fehlerhafte Befestigung der Längsanschlagklappe nach Umstecken vermieden.

Schließlich ist es bevorzugt, die erfindungsgemäße Anschlagschiene durch einen dritten Aktuator zum Verschwenken der Anschlagschiene um eine senkrecht zur Werkstückauflagefläche liegende Achse fortzubilden, um hierdurch nicht nur die Längsanschlagsflächen mittels Aktuatoren verstellen zu können, sondern auch die Verschwenkung der Anschlagschiene mittels Aktuator durchführen zu können.

Gemäß eines weiteren Aspekts wird erfindungsgemäß eine Formatkreissäge bereitgestellt, umfassend
- eine Eingabevorrichtung und/oder einen Sensor zur Eingabe/Erfassung eines ersten Längenmaßes für die erste Längsanschlagfläche und
- eine Eingabevorrichtung und/oder einen Sensor zur Eingabe/Erfassung eines zweiten Längenmaßes für die zweite Längsanschlagfläche,
- eine Eingabevorrichtung und/oder einen Sensor zur Eingabe/Erfassung eines Schwenkwinkels einer Anschlagschiene nach einem der Ansprüche 1-13.

Die Formatkreissäge weist weiterhin eine Anschlagschiene nach einem der vorhergehenden Ansprüche und eine Aktuatorsteuerung auf, die ausgebildet ist, um aus dem ersten und zweiten Längenmaß und dem Schwenkwinkel einen Längenkorrekturwert zu berechnen und den ersten und zweiten Aktuator so anzusteuern, dass die erste und zweite Längsanschlagfläche so entlang der Anschlagschiene verschoben werden, dass der Abstand zwischen erster Längsanschlagfläche und Sägeblatt und zwischen zweiter Längsanschlagfläche und Sägeblatt dem ersten bzw. zweiten Längenmaß entspricht.

Mit der erfindungsgemäßen Formatkreissäge ist eine entscheidend vielseitigere Verstellung der ersten und zweiten Längsanschlagsflächen möglich und hierdurch ein wirtschaftlicherer und effizienterer Betrieb der Formatkreissäge möglich. Insbesondere können mit der erfindungsgemäßen Formatkreissäge in Abhängigkeit eines Schwenkwinkels sowohl ein erstes als auch ein zweites Längenmaß mittels Aktuatoren korrigiert werden, beispielsweise um auf einen geänderten Schwenkwinkel zu reagieren und ein ursprünglich eingestelltes oder eingegebenes Längenmaß wiederherzustellen.

Die Formatkreissäge kann weiter fortgebildet werden, indem die Eingabevorrichtung ausgebildet ist, um ein Breitenmaß zu erfassen, welches eine gewünschte oder gegebene Abmessung des zu bearbeitenden Werkstücks senkrecht zum ersten und/oder zweiten Längenmaß darstellt, und die Aktuatorsteuerung ausgebildet ist, um aus
- dem Breitenmaß,
- dem ersten und/oder dem zweiten Längenmaß und
- dem Schwenkwinkel
eine Korrekturgröße zu ermitteln und zumindest einen, vom Benutzer vorbestimmbaren Korrekturwert für den ersten und/oder zweiten Längsanschlag und/oder Verschwenkwinkel zu berechnen und den/die entsprechenden Aktuator(en) zur Einstellung dieses Korrekturwerts zu betätigen. Diese Fortbildung ermöglicht neben der schwenkwinkelabhängigen Korrektur eines Längenmaßes auch die längenmaß- und breitenmaßabhängige Einstellung eines Schwenkwinkels, was beispielsweise für sogenannte "falsche Gehrungsschnitte" erforderlich ist, also für Gehrungsschnitte, die zwei unterschiedlich breite Werkstücke miteinander bündig und in einem bestimmten Winkel zueinander verbinden sollen. Zu diesem Zweck kann die erfindungsgemäße Formatkreissäge bei Vorgabe von zumindest drei von vier Maßen, umfassend Breitenmaß, erstes und zweites Längenmaß und Schwenkwinkel, das vierte Maß errechnen und gegebenenfalls auch mittels des Aktuators einstellen. Hierbei kann der Benutzer entweder die vorgegebenen drei Maße mittels einer Eingabeeinheit eingeben, so dass sie mittels der Aktuatoren eingestellt werden oder er kann die Einstellungen manuell vornehmen, so dass sie erfasst und verarbeitet werden können.

Die Funktion kann um die Eingabe des gewünschten Winkels zwischen zwei Werkstücken noch erweitert werden, um auch Gehrungsschnitte für Werkstücke ausführen zu können, die nicht rechtwinklig zueinander stehen sollen

Eine bevorzugte Ausführungsform wird anhand der Figuren beschrieben. Es zeigen:
- Fig. 1:: eine perspektivische Draufsicht auf eine erfindungsgemäße Anschlagschiene, montiert an einem Quertisch und Rollwagen,
- Fig. 2:: eine perspektivische Draufsicht gemäß Figur 1 mit verschwenkter Anschlagschiene,
- Fig. 3:: eine Frontalansicht der Anschlagschiene gern. Fig. 1 und 2,
- Fig. 4:: einen Querschnitt durch die Anschlagschiene entlang der Linie A-A in Fig. 3,
- Fig. 5:: einen Querschnitt durch die Anschlagschiene entlang der Linie B-B in Fig. 3,
- Fig. 6:: einen Querschnitt durch die Anschlagschiene in Höhe des Schwenklagers entlang der Linie C-C in Fig. 3.
- Fig. 7:: einen Querschnitt durch die Anschlagschiene entlang der Linie F-F in Fig. 3, und
- Fig. 8:: einen Querschnitt durch die Anschlagschiene mit montierten Führungswagen.

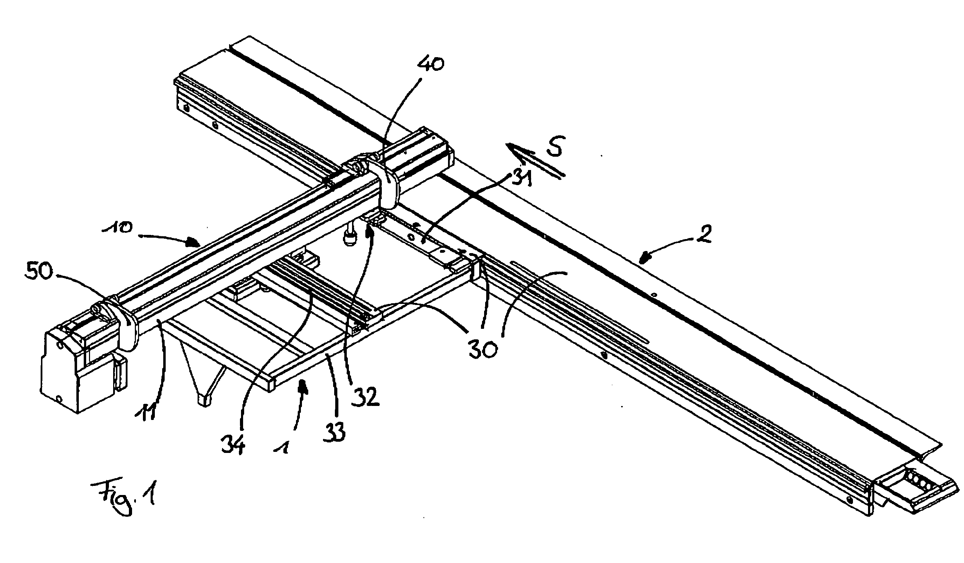

Figur 1 zeigt die erfindungsgemäße Anschlagschiene in einer Anordnung zum Ausführen rechtwinkliger Schnitte. Die Anschlagschiene 10 ist oberhalb eines Quertischs 1 angeordnet, der seinerseits an einem Rollwagen 2 befestigt ist.

Die Anschlagschiene ist in einem rechten Winkel zur Bewegungsrichtung des Rollwagens angeordnet, die mit Pfeil S in Fig. 1 gekennzeichnet ist. Der Pfeil S liegt in der Schnittebene des Kreissägeblatts (nicht dargestellt) und in der in Fig. 1 abgebildeten Ausrichtung liegt die Achse des Kreissägeblatts parallel zur Anschlagschiene 10.

An der Anschlagschiene 10 ist eine erste Anlagefläche 11 angeordnet, die senkrecht zu einer Werkstückauflagefläche 30 auf Quertisch und Rollwagen liegt. Die Werkstückauflagefläche 30 wird durch die oberen Flächen mehrerer Profile und Platten des Quertischs 1 und des Rollwagens 2 gebildet.

Eine erste Längsanschlagklappe 40 und eine zweite Längsanschlagklappe 50 sind an der Anschlagschiene 10 angeordnet. Ein Profil 31 am Quertisch 1 dient dazu, ein Schwenklager 32 zum Verschwenken der Anschlagschiene aufzunehmen.

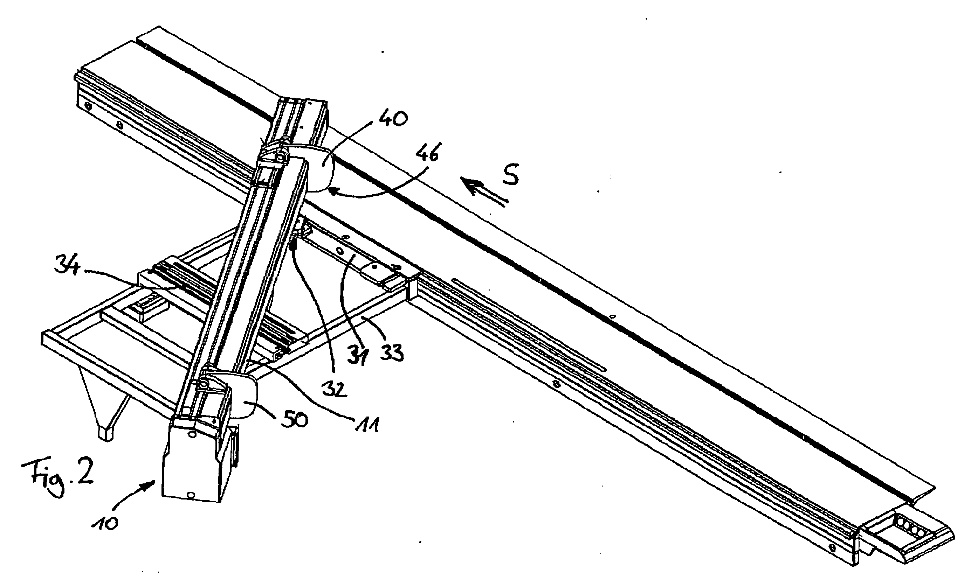

In Figur 2 ist die Anschlagschiene in einer um etwa 45° um das Schwenklager 32 verschwenkten Lage gezeigt. Man erkennt, dass an einem Werkstück , welches an die Anlagefläche 11 angelegt wird und in Schnittrichtung S am Kreissägeblatt entlanggeführt wird, ein Schnitt ausgeführt würde, der in einem Winkel von etwa 45° zur Anlagefläche 11 und damit der an der Anlagefläche 11 anliegenden Werkstückkante verläuft.

Weiterhin erkennt man bei Vergleich der Figuren 1 und 2, dass sich der Abstand zwischen den Anschlagklappen 40, 50 und der Kreissägeblattebene S durch die Verschwenkung der Anschlagschiene verringert hat. Demzufolge müssten die Anschlagklappen 40, 50 in der in Fig. 2 dargestellten Anordnung nach vorne verschoben werden, um den gleichen Abstand zwischen der an den Anschlagklappen liegenden Werkstückkante und der Kreissägeblattebene zu erzielen wie in Figur 1.

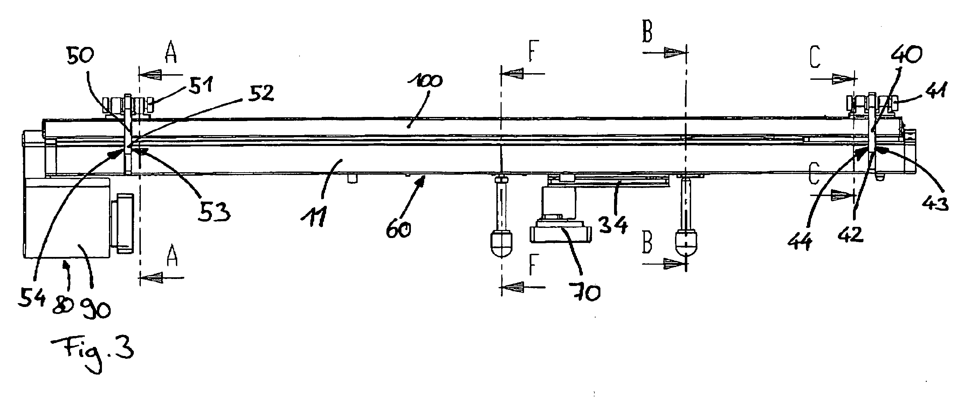

Wie gut in Figur 3 erkennbar, sind die erste Längsanschlagklappe 40 und die zweite Längsanschlagklappe 50 oberhalb eines Hauptprofils 60 der Anschlagschiene mittels jeweils eines Bolzens 51,41 befestigt. Der Bolzen 41,51 kann in axialer Richtung aus seinen Führungsaugen gezogen werden und die Längsanschlagkappe kann dann entnommen werden, um 180° um die Hochachse gedreht werden und auf der anderen Seite des Hauptprofils der Anschlagschiene angeordnet werden. Um die Funktion eines Längsanschlags auf beiden Seiten der Anschlagschiene erfüllen zu können, weist jede Längsanschlagklappe einen flächigen Wandbereich 52 auf, der auf einer Seite eine erste Längsanschlagfläche 53,43 aufweist, die in der in Fig. 2 abgebildeten Anordnung der Längsanschlagklappen als Längsanschlagfläche dient und eine weitere Längsanschlagfläche 44,54, die in einer zu Fig. 2 umgesteckten Anordnung der Längsanschlagklappen als Längsanschlagfläche dient. Diese umgesteckte Anordnung wird dann verwendet, wenn die Anschlagschiene auf dem Quertisch so angeordnet ist, dass sie etwa oberhalb des in Fig. 1 gezeigten vorderen Profils 33 angeordnet ist, also parallel entgegen der mit "S" gezeigten Schnittrichtung verschoben worden ist. In diesem Fall liegt die Werkstückauflagefläche 30 auf der anderen Seite der Anschlagschiene 10 und die Längsanschlagklappen müssen folglich ebenfalls auf dieser Seite liegen.

Unterhalb eines Profils 34 des Quertisches 30 ist ein Servomotor 70 angeordnet, der als Aktuator zur Verschwenkung der Anschlagschiene 10 um die Hochachse dient. Am äußeren Ende der Anschlagschiene 10 sind zwei Servomotoren 80,90 angeordnet, die als Aktuatorantriebe zur Längsverstellung der Längsanschlagklappen 40,50 dienen.

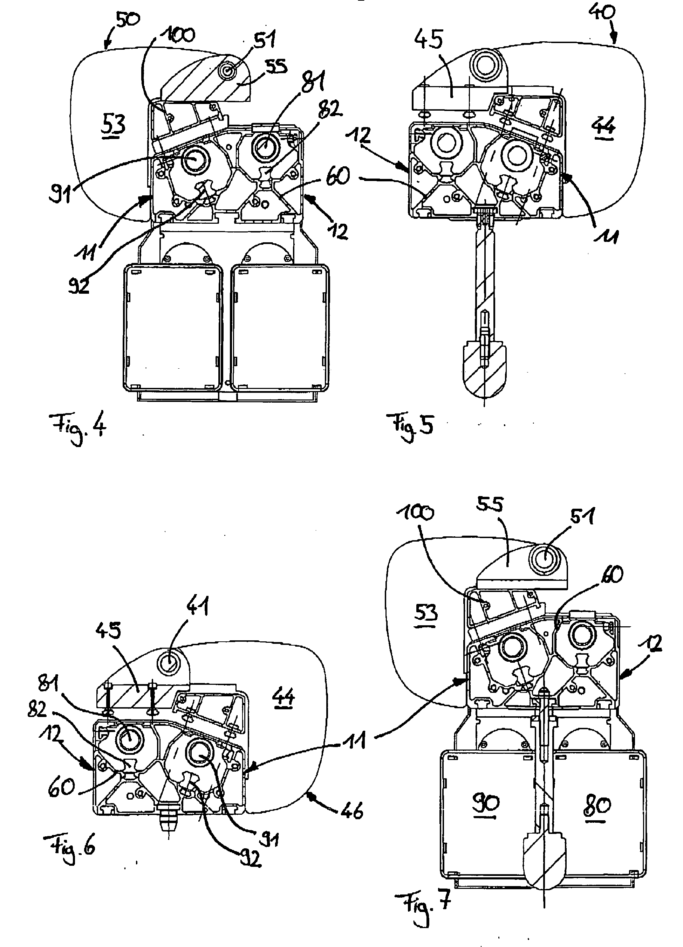

Anhand der Fig. 4-7 wird der Aufbau der Anschlagschiene im Detail erläutert. Die Anschlagschiene umfasst ein die strukturelle Hauptlast tragendes Hauptprofil 60, welches als Mehrkammerhohlprofil ausgeführt ist. Das Hauptprofil 60 ist an beiden Längsseiten durch senkrecht stehende Anlageflächen 11,12 begrenzt, die als Anlagefläche für ein Werkstück dienen.

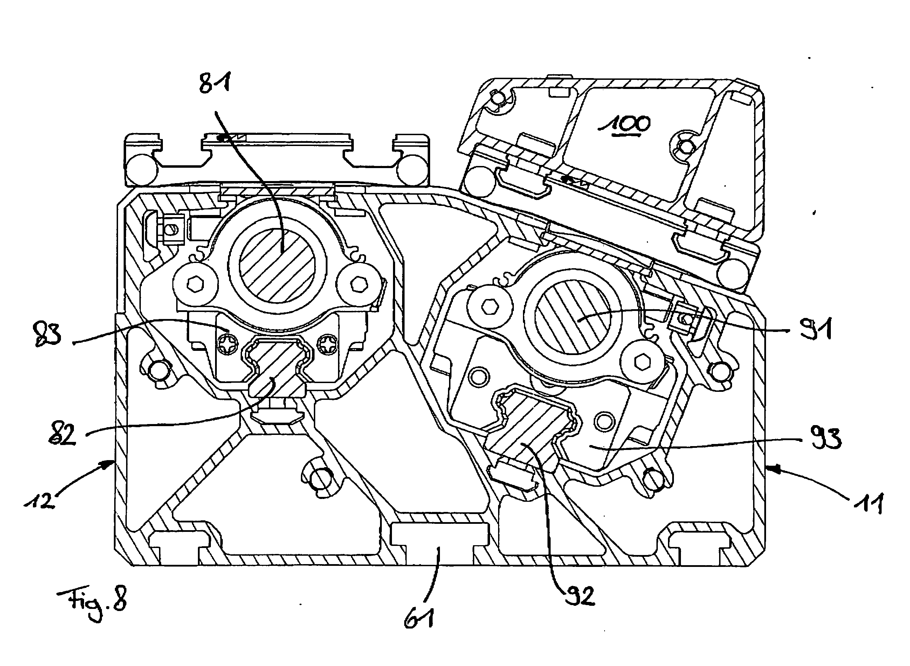

Innerhalb des Hauptprofils 60 ist eine erste Kugelrollspindel 81 angeordnet, die mittels eines Servoantriebs 80 angetrieben wird. Die erste Kugelrollspindel 81 dient dazu, die erste Längsanschlagklappe 40 in Längsrichtung der Anschlagschiene zu verfahren. Zu diesem Zweck ist die Längsanschlagklappe 40 mittels eines Bolzens 41 einem Befestigungsblock 45 befestigt, die an einem in Fig. 8 erkennbaren ersten Führungswagen 83 befestigt ist, der an einer ersten Linearführungsschiene 82 in Längsrichtung der Anschlagschiene 10 beweglich geführt und gelagert ist.

Der erste Führungswagen 83 wird durch die Kugelrollspindel 81 angetrieben und verschiebt somit die Längsanschlagklappe 40 entlang der Anlageflächen 11 bzw. 12, je nach der Anordnung der Längsanschlagklappe 40.

Die Längsanschlagklappe 50 ist wiederum mittels eines Befestigungsbolzens 51 an einem Befestigungsblock 55 manuell lösbar befestigt und kann entsprechend von der abgebildeten Anordnung auf der Seite der Anlagefläche 11 auf die andere Seite der Anschlagschiene zur Anlagefläche 12 umgesteckt werden.

Der Befestigungsblock 55 ist an einem Verlängerungsprofil 100 befestigt, dessen obere Wandfläche horizontal liegt und dessen untere Wandfläche zur Horizontalen geneigt ist. Das Verlängerungsprofil 100 erstreckt sich in Längsrichtung des Hauptprofils 60 und ist in den Figuren 1-3 in voll eingefahrener Position dargestellt. Das Verlängerungsprofil 100 ist, wie in Figur 8 erkennbar, mittels eines zweiten Führungswagens 93 an einer zweiten Linearführungsschiene 92 so gelagert und geführt, dass er in Längsrichtung entlang des Hauptprofils 60 bewegt werden kann.

Eine zweite Kugelrollspindel 91 ist innerhalb einer zweiten Hohlkammer des Hauptprofils 60 angeordnet und wird durch einen zweiten Servomotor 90 angetrieben. Die zweite Kugelrollspindel 91 ist mit dem zweiten Führungswagen 93 verbunden und dient dazu, das Verlängerungsprofil 100 mitsamt der daran befestigten zweiten Längsanschlagklappe 50 in Längsrichtung des Hauptprofils 60 zu verschieben. Bei Betätigung des Servomotors 90 würde das Verlängerungsprofil 100 in der in Fig. 3 dargestellten Abbildung nach links über die Servomotoren 80,90 hinaus verschoben.

Zentral in der unteren Fläche des Hauptprofils 60 ist eine Nut 61 ausgebildet, die zur Aufnahme von Klemmsteinen und zur Aufnahme der Schwenkachslagerung, wie in Figur 6 erkennbar, ausgebildet ist. Die Mittelachsen der Befestigungsbolzen 41,51 der beiden Längsanschlagklappen 40,50 liegen vertikal genau senkrecht oberhalb der Mittelachse dieser Nut, so dass die Steckbolzen 41,51 zu jeder Ebene der Anlageflächen 11,12 den gleichen Abstand aufweisen. Auf diese Weise ist gewährleistet, dass die Längsanschlagklappen nach Umstecken in gleicher Weise an der Anlagefläche 12 anliegen, wie sie in der abgebildeten Anordnung an der Anlagefläche 11 anliegen.

Die Funktionsweise der erfindungsgemäßen Anschlagschiene für die beispielhafte Ausführung eines Winkelschnitts an einer Werkstückplatte ist wie folgt: Der Benutzer gibt zunächst an einer Bedieneinheit (nicht dargestellt) ein gewünschtes erstes Längenmaß, ein gewünschtes zweites Längenmaß und einen gewünschten Winkel zwischen zwei Seiten der zuzuschneidenden Platte ein. Hierauf folgend verfährt die Maschinensteuerung die erste Längsanschlagklappe 40 auf ein aus dem ersten Längenmaß und dem Winkel berechnetes Längenmaß und die zweite Längsanschlagklappe 50 auf ein aus dem zweiten Längenmaß und dem Winkel berechnetes zweites Längenmaß, indem über die Servomotoren 80 und 90 die Kugelrollspindeln 81 bzw. 91 betätigt werden.

Hierauf folgend kann der Benutzer das Werkstück auf die Werkstückauflage 30 auflegen und schiebt es an die Anlagefläche 11 zur bündigen und parallelen Anlage heran. Wird zuerst das zweite Längenmaß geschnitten, so drückt der Benutzer hierbei mit dem Werkstück die erste Längsanschlagklappe herauf, was durch die zum Werkstück weisende Rundung 46 ermöglicht wird. Die Längsanschlagklappe 40 verschwenkt sich daher um einen geringen Winkel um den Steckbolzen 41 nach oben und dient bei der Ausführung des ersten Schnitts nicht als Anschlagfläche.

Hierauf folgend verschiebt der Benutzer das Werkstück entlang der Anlagefläche 11 bis es an den zweiten Längenanschlag 53 anstößt und definiert somit das erste Längenmaß. In dieser Position wird der erste Schnitt ausgeführt, indem der Rollwagen mit daran angeordnetem Quertisch und der Anschlagschiene verschoben wird und das Werkstück dem Kreissägeblatt in dieser Position zugeführt wird.

Mittels des Servomotors 70 wird die Anschlagschiene nun um den eingegebenen Winkel verschwenkt und die Längsanschlagsklappen gegebenenfalls um ein Längenkorrekturmaß mittels der Servomotoren 80,90 verschoben.

Anschließend wird das Werkstück auf der Werkstückauflagefläche belassen, und so gedreht, dass eine andere Seitenkante des Werkstücks zur Anlage an der Anlagefläche 11 kommt. Nun wird das Werkstück soweit nach links verschoben, dass es an der Anschlagfläche 43 der ersten Längsanschlagsklappe anliegt. Typischerweise ist die Längsanschlagsklappe 40 in einer weiter links als in Fig. 2 abgebildeten Position entlang der Anschlagschiene angeordnet. Hierauf folgend wird der zweite Schnitt ausgeführt, wie zuvor beschrieben und das Werkstück ist auf Maß zugeschnitten.

## Patentansprüche

1. Anschlagschiene (10) für eine Formatkreissäge, umfassend:
- eine Befestigungsvorrichtung, die ausgebildet ist, um die Anschlagschiene am Quertisch der Formatkreissäge oberhalb einer Werkstückauflagefläche (30) des Quertisches zu befestigen,
- ein Drehlager, das ausgebildet ist, um die Anschlagschiene relativ zu der Schnittebene zu verschwenken,
- eine erste Anlagefläche (11), die sich in Längsrichtung der Anschlagschiene erstreckt und senkrecht zur Werkstückauflagefläche (30) des Quertischs ausgerichtet ist,
- eine erste Längsanschlagfläche (43), die beweglich und arretierbar entlang der Längsrichtung der Anschlagschiene geführt ist,
- eine zweite Längsanschlagsfläche (53), die beweglich und arretierbar entlang der Längsrichtung der Anschlagschiene geführt ist,
**gekennzeichnet durch** einen ersten Aktuator (80,81) zur Verschiebung der ersten Längsanschlagfläche entlang der Anschlagschiene und einen zweiten Aktuator (90,91) zur Verschiebung der zweiten Längsanschlagfläche entlang der Anschlagschiene, wobei die erste und zweite Längsanschlagfläche unabhängig voneinander mittels des ersten bzw. zweiten Aktuators entlang der Anschlagschiene verschiebbar ausgebildet sind, um eine einmalige Positionierung der ersten und zweiten Längsanschlagflächen entsprechend zweier zuzuschneidender Maße vorzunehmen.

2. Anschlagschiene nach Anspruch 1,
**dadurch gekennzeichnet, dass** der erste und zweite Aktuator jeweils eine erste und zweite Gewindespindel (81,91) umfasst, die unabhängig voneinander in Drehung versetzbar sind.

3. Anschlagschiene nach Anspruch 2,
**dadurch gekennzeichnet, dass** die erste und zweite Gewindespindel (81;91) sich in Längsrichtung der Anschlagschiene (10) erstrecken und zumindest teilweise, vorzugsweise vollständig in einem hohlen Hauptprofil (60) angeordnet sind, welches Bestandteil der Anschlagschiene ist.

4. Anschlagschiene nach einem der vorhergehenden Ansprüche,
**gekennzeichnet durch** eine erste Linearführung (82), mittels der eine erste Längsanschlagklappe (40), an der die erste Längsanschlagfläche (43) angeordnet ist, relativ zu einem Hauptprofil (60) der Anschlagschiene gelagert ist und eine zweite Linearführung (92), mittels der eine zweite Längsanschlagklappe (50), an der die zweite Anschlagfläche (53) angeordnet ist, relativ zu dem Hauptprofil der Anschlagschiene gelagert ist.

5. Anschlagschiene nach dem vorhergehenden Anspruch,
**dadurch gekennzeichnet, dass** die zweite Längsanschlagklappe (50) auf einem Verlängerungsprofil (100) angeordnet ist, welches sich in Längsrichtung des Hauptprofils erstreckt und mittels der zweiten Linearführung relativ zu dem Hauptprofil der Anschlagschiene gelagert ist.

6. Anschlagschiene nach dem vorhergehenden Anspruch,
**dadurch gekennzeichnet, dass** das Verlängerungsprofil (100) auf einer relativ zur Werkstückauflage (30) geneigt ausgerichteten Fläche des Hauptprofils (60) angeordnet ist, insbesondere auf einer Fläche, die nach außen hin nach unten geneigt verläuft.

7. Anschlagschiene nach dem vorhergehenden Anspruch,
**dadurch gekennzeichnet, dass** die obere Fläche des Verlängerungsprofl (100) horizontal ausgerichtet ist.

8. Anschlagschiene nach dem vorhergehenden Anspruch 5, 6 oder 7,
**dadurch gekennzeichnet, dass** die zweite Längsanschlagklappe (50) in zumindest zwei in Längsrichtung des Verlängerungsprofils voneinander beabstandeten Positionen auf dem Verlängerungsprofil befestigbar ist.

9. Anschlagschiene nach dem vorhergehenden Anspruch,
**gekennzeichnet durch** einen mit der Steuerung der Formatkreissäge koppelbaren Sensor zur Erfassung der Position der zweiten Längsanschlagklappe (50) relativ zum Verlängerungsprofil.

10. Anschlagschiene nach einem der vorhergehenden Ansprüche 4 bis 9,
**dadurch gekennzeichnet, dass** die Befestigungsvorrichtung so ausgebildet ist, dass die Anschlagschiene
- in einer ersten Position, in der eine erste, sich in Längsrichtung der Anschlagschiene erstreckende und senkrecht zur Werkstückauflagefläche ausgerichtete Anlagefläche (11) als Werkstückanlage dient, und
- in einer zweiten Position, in der eine zweite, sich in Längsrichtung der Anschlagschiene erstreckende und senkrecht zur Werkstückauflagefläche ausgerichtete Anlagefläche (12) als Werkstückanlage dient,
am Quertisch der Formatkreissäge befestigbar ist und dass zumindest eine, vorzugsweise beide Längsanschlagklappen manuell lösbar an der Anschlagschiene befestigbar sind und
- in einer ersten Position an der Anschlagschiene montiert werden können, in welcher die Längsanschlagklappe als Längsanschlag (43;53) auf der Seite der ersten Anlagefläche (11) dient, und
- in einer zweiten Position an der Anschlagschiene montiert werden können, in welcher die Längsanschlagklappe als Längsanschlag (44;54) auf der Seite der zweiten Anlagefläche (12) dient.

11. Anschlagschiene nach dem vorhergehenden Anspruch,
**dadurch gekennzeichnet, dass** jede Längsanschlagklappe einen Wandbereich (42;52) aufweist, der auf seiner ersten Wandseite die Längsanschlagsfläche (43;53) für die erste Position aufweist und auf seiner zweiten, zur ersten rückwärtig angeordneten Wandseite, die Längsanschlagsfläche (44;54) für die zweite Position aufweist.

12. Anschlagschiene nach einem der vorhergehenden Ansprüche 7 bis 11,
**dadurch gekennzeichnet, dass** jede Längsanschlagklappe (40,50) mittels eines Befestigungselements (41,51) manuell lösbar an der Anschlagschiene befestigbar ist, welches von der ersten und der zweiten Anlagefläche (11,12) gleich beabstandet ist.

13. Anschlagschiene nach einem der vorhergehenden Ansprüche,
**gekennzeichnet durch** einen dritten Aktuator (70) zum Verschwenken der Anschlagschiene um eine senkrecht zur Werkstückauflagefläche liegende Achse.

14. Formatkreissäge, umfassend
- eine Eingabevorrichtung und/oder ein Sensor zur Eingabe/Erfassung eines ersten Längenmaßes für die erste Längsanschlagfläche und
- eine Eingabevorrichtung und/oder ein Sensor zur Eingabe/Erfassung eines zweiten Längenmaßes für die zweite Längsanschlagfläche,
- eine Eingabevorrichtung und/oder ein Sensor zur Eingabe/Erfassung eines Schwenkwinkels einer Anschlagschiene nach einem der vorhergehenden Ansprüche,
**gekennzeichnet durch** eine Anschlagschiene (10) nach einem der vorhergehenden Ansprüche und eine Aktuatorsteuerung, die ausgebildet ist, um aus dem ersten und zweiten Längenmaß und dem Schwenkwinkel einen Längenkorrekturwert zu berechnen und den ersten und zweiten Aktuator so anzusteuern, dass die erste und zweite Längsanschlagfläche so entlang der Anschlagschiene verschoben werden, dass der Abstand zwischen erster Längsanschlagfläche und Sägeblatt und zwischen zweiter Längsanschlagfläche und Sägeblatt dem ersten bzw. zweiten Längenmaß entspricht.

15. Formatkreissäge nach dem vorhergehenden Anspruch,
**dadurch gekennzeichnet, dass** die Eingabevorrichtung ausgebildet ist, um ein Breitenmaß zu erfassen, welches eine gewünschte oder gegebene Abmessung des zu bearbeitenden Werkstücks senkrecht zum ersten und/oder zweiten Längenmaß darstellt, und die Aktuatorsteuerung ausgebildet ist, um aus
- dem Breitenmaß,
- dem ersten und/oder dem zweiten Längenmaß und
- dem Schwenkwinkel
eine Korrekturgröße zu ermitteln und zumindest einen, vom Benutzer vorbestimmbaren Korrekturwert für den ersten und/oder zweiten Längsanschlag und/oder Verschwenkwinkel zu berechnen und den/die entsprechenden Aktuator(en) zur Einstellung dieses Korrekturwerts zu betätigen.

## Claims

1. An abutment rail (10) for a trimming circular saw comprising:
- a fastening device which is adapted to fasten the abutment rail to the transverse table of the trimming circular saw above a workpiece support surface (30) of the transverse table,
- a rotary bearing which is adapted to pivot the abutment rail relative to the cutting plane,
- a first contact surface (11) which extends in the longitudinal direction of the abutment rail and is oriented perpendicularly to the workpiece support surface (30) of the transverse table,
- a first longitudinal abutment surface (43) which is guided movably and lockably along the longitudinal direction of the abutment rail, and
- a second longitudinal abutment surface (53) which is guided movably and lockably along the longitudinal direction of the abutment rail,
**characterised by** a first actuator (80, 81) for displacement of the first longitudinal abutment surface along the abutment rail and a second actuator (90, 91) for displacement of the second longitudinal abutment surface along the abutment rail, wherein the first and second longitudinal abutment surfaces are adapted to be displaceable independently of each other by means of the first and second actuators respectively along the abutment rail in order to effect one-off positioning of the first and second longitudinal abutment surfaces in accordance with two dimensions to be cut to size.

2. An abutment rail according to claim 1 **characterised in that** the first and second actuators each include a first and a second screwthreaded spindle (81; 91) which are rotatable independently of each other.

3. An abutment rail according to claim 2 **characterised in that** the first and second screwthreaded spindles (81, 91) extend in the longitudinal direction of the abutment rail (10) and are arranged at least in part and preferably completely in a hollow main profile member (60) which is a component part of the abutment rail.

4. An abutment rail according to one of the preceding claims **characterised by** a first linear guide (82), by means of which a first longitudinal abutment flap (40) on which the first longitudinal abutment surface (43) is arranged is mounted relative to a main profile member (60) of the abutment rail and a second linear guide (92), by means of which a second longitudinal abutment flap (50) on which the second abutment surface (53) is arranged is mounted relative to the main profile member of the abutment rail.

5. An abutment rail according to the preceding claim **characterised in that** the second longitudinal abutment flap (50) is arranged on a prolongation profile member (100) which extends in the longitudinal direction of the main profile member and is mounted by means of the second linear guide relative to the main profile member of the abutment rail.

6. An abutment rail according to the preceding claim **characterised in that** the prolongation profile member (100) is arranged on a surface of the main profile member (60), that is oriented inclinedly relative to the workpiece support (30), in particular on a surface which extends inclinedly outwardly and downwardly.

7. An abutment rail according to the preceding claim **characterised in that** the upper surface of the prolongation profile member (100) is oriented horizontally.

8. An abutment rail according to preceding claim 5, claim 6 or claim 7 **characterised in that** the second longitudinal abutment flap (50) can be fastened on the prolongation profile member in at least two positions spaced from each other in the longitudinal direction of the prolongation profile member.

9. An abutment rail according to the preceding claim **characterised by** a sensor coupled to the control of the trimming circular saw for detecting the position of the second longitudinal abutment flap (50) relative to the prolongation profile member.

10. An abutment rail according to one of preceding claims 4 to 9 **characterised in that** the fastening device is so adapted that the abutment rail can be fastened to the transverse table of the trimming circular saw
- in a first position in which a first contact surface (11) extending in the longitudinal direction of the abutment rail and oriented perpendicularly to the workpiece support surface serves as a workpiece contact, and
- in a second position in which a second contact surface (12) extending in the longitudinal direction of the abutment rail and oriented perpendicularly to the workpiece support surface serves as a workpiece contact,
and that at least one and preferably both longitudinal abutment flaps can be manually releasably fastened to the abutment rail and
- can be mounted to the abutment rail in a first position in which the longitudinal abutment flap serves as a longitudinal abutment (43; 53) on the side of the first contact surface (11), and
- can be mounted to the abutment rail in a second position in which the longitudinal abutment flap serves as a longitudinal abutment (44; 54) on the side of the second contact surface (12).

11. An abutment rail according to the preceding claim **characterised in that** each longitudinal abutment flap has a wall region (42; 52) which on its first wall side has the longitudinal abutment surface (43; 53) for the first position and on its second wall side which is arranged rearward relative to the first has the longitudinal abutment surface (44; 54) for the second position.

12. An abutment rail according to one of preceding claims 7 to 11 **characterised in that** each longitudinal abutment flap (40, 50) can be manually releasably fastened to the abutment rail by means of a fastening element (41, 51) which is spaced equally from the first and second contact surfaces (11, 12).

13. An abutment rail according to one of the preceding claims **characterised by** a third actuator (70) for pivoting the abutment rail about an axis disposed perpendicularly to the workpiece support surface.

14. A trimming circular saw comprising
- an input device and/or a sensor for inputting/detecting a first length dimension for the first longitudinal abutment surface, and
- an input device and/or a sensor for inputting/detecting a second length dimension for the second longitudinal abutment surface,
- an input device and/or a sensor for inputting/detecting a pivotal angle of an abutment rail according to one of the preceding claims,
**characterised by** an abutment rail (10) according to one of the preceding claims and an actuator control which is adapted to calculate a length correction value from the first and second length dimensions and the pivotal angle and to actuate the first and second actuators in such a way that the first and second longitudinal abutment surfaces are displaced along the abutment rail in such a way that the spacing between the first longitudinal abutment surface and the saw blade and between the second longitudinal abutment surface and the saw blade corresponds to the first and second length dimension respectively.

15. A trimming circular saw according to the preceding claim **characterised in that** the input device is adapted to detect a width dimension which represents a desired or given dimension of the workpiece to be machined perpendicularly to the first and/or second length dimension and the actuator control is adapted to ascertain a correction value from
- the width dimension,
- the first and/or the second length dimension, and
- the pivotal angle
and to calculate at least one correction value which can be predetermined by the user for the first and/or second longitudinal abutment and/or the pivotal angle and to actuate the corresponding actuator or actuators for setting said correction value.

## Revendications

1. Réglette à butée (10) pour une scie circulaire de mise à format, comprenant :
- un dispositif de fixation qui est configuré pour fixer la réglette à butée sur la table transversale de la scie circulaire de mise à format au-dessus d'une surface porte-pièce (30) de la table transversale,
- un coussinet de pivotement qui est configuré pour faire pivoter la réglette à butée par rapport au plan de coupe,
- une première surface d'appui (11) qui s'étend dans la direction longitudinal de la réglette à butée et est orientée perpendiculairement à la surface porte-pièce (30) de la table transversale,
- une première surface de butée longitudinale (43) qui est guidée de manière mobile et blocable le long de la direction longitudinale de la réglette à butée,
- une deuxième surface de butée longitudinale (53) qui est guidée de manière mobile et blocable le long de la direction longitudinale de la réglette à butée,
**caractérisée par** un premier actionneur (80, 81) destiné à déplacer la première surface de butée longitudinale le long de la réglette à butée et un deuxième actionneur (90, 91) destiné à déplacer la deuxième surface de butée longitudinale le long de la réglette à butée, la première et la deuxième surface de butée longitudinale étant configurées pour être déplacées indépendamment l'une de l'autre au moyen du premier ou du deuxième actionneur le long de la réglette à butée pour procéder à un positionnement unique des première et deuxième surfaces de butée longitudinale correspondant à deux dimensions de mise à longueur.

2. Réglette à butée selon la revendication 1, **caractérisée en ce que** le première et le deuxième actionneur comprennent respectivement une première et une deuxième broche filetée (81, 91) qui peuvent être mises en rotation indépendamment l'une de l'autre.

3. Réglette à butée selon la revendication 2, **caractérisée en ce que** la première et la deuxième broche filetée (81, 91) s'étendent dans la direction longitudinale de la réglette à butée (10) et sont disposées au moins en partie, de préférence en totalité dans un profilé principal creux (60) qui fait partie de la réglette à butée.

4. Réglette à butée selon l'une des revendications précédentes, **caractérisée par** un premier guidage linéaire (82) au moyen duquel un premier clapet de butée longitudinal (40) sur lequel est disposée la première surface de butée longitudinale (43) est monté par rapport au profilé principal (60) de la réglette à butée et un deuxième guidage linéaire (92) au moyen duquel un deuxième clapet de butée longitudinal (50) sur lequel est disposée la deuxième surface de butée (53) est monté par rapport au profilé principal de la réglette à butée.

5. Réglette à butée selon la revendication précédente, **caractérisée en ce que** le deuxième clapet de butée longitudinal (50) est disposé sur un profilé de prolongement (100) qui s'étend dans la direction longitudinale du profilé principal et est monté au moyen du deuxième guidage linéaire par rapport au profilé principal de la réglette à butée.

6. Réglette à butée selon la revendication précédente, **caractérisée en ce que** le profilé de prolongement (100) est disposé sur une surface du profilé principal qui est orientée de manière inclinée par rapport à la surface porte-pièce (30), en particulier sur une surface qui s'étend de manière inclinée vers le bas en direction de l'extérieur.

7. Réglette à butée selon la revendication précédente, **caractérisée en ce que** la surface supérieure du profilé de prolongement (100) est orientée de manière horizontale.

8. Réglette à butée selon la revendication précédente 5, 6 ou 7, **caractérisée en ce que** le deuxième clapet de butée longitudinal (50) peut être fixé sur le profilé de prolongement dans au moins deux positions espacées l'une de l'autre dans la direction longitudinale du profilé de prolongement.

9. Réglette à butée selon la revendication précédente, **caractérisée par** un capteur qui peut être couplé à la commande de la scie circulaire de mise à format et est destiné à détecter la position du deuxième clapet de butée longitudinal (50) par rapport au profilé de prolongement.

10. Réglette à butée selon l'une des revendications précédentes, **caractérisée en ce que** le dispositif de fixation est configuré de telle manière que la réglette à butée puisse être fixée à la table transversale de la scie circulaire de mise à format
- dans une première position dans laquelle une première surface d'appui (11) s'étendant dans la direction longitudinale de la réglette à butée et orientée perpendiculairement à la surface porte-pièce sert d'appui pour la pièce, et
- dans une deuxième position dans laquelle une deuxième surface d'appui (12) s'étendant dans la direction longitudinale de la réglette à butée et orientée perpendiculairement à la surface porte-pièce sert d'appui pour la pièce,
et **en ce qu'**au moins un, de préférence les deux clapets de butée longitudinaux peuvent être fixés de manière manuellement amovibles sur la réglette à butée et
- peuvent être montés sur la réglette à butée dans une première position dans laquelle le clapet de butée longitudinal sert de butée longitudinale (43, 53) sur le côté de la première surface d'appui (11), et
- peuvent être montés sur la réglette à butée dans une deuxième position dans laquelle le clapet de butée longitudinal sert de butée longitudinale (44, 54) sur le côté de la deuxième surface d'appui (12).

11. Réglette à butée selon la revendication précédente, **caractérisée en ce que** chaque clapet de butée longitudinal présente une zone de paroi (42, 52) qui présente sur son premier côté de paroi la surface de butée longitudinale (43, 53) pour la première position et sur son deuxième côté de paroi disposé à l'arrière du premier la surface de butée longitudinale (44, 54) pour la deuxième position.

12. Réglette à butée selon l'une des revendications précédentes 7 à 11, **caractérisée en ce que** chaque clapet de butée longitudinal (40, 50) peut être fixé de manière manuellement amovible sur la réglette à butée au moyen d'un élément de fixation (41, 51) qui est espacé de manière identique de la première et de la deuxième surface d'appui (11, 12).

13. Réglette à butée selon l'une des revendications précédentes, **caractérisée par** un troisième actionneur (70) pour faire pivoter la réglette à butée autour d'un axe s'étendant perpendiculairement à la surface porte-pièce.

14. Scie circulaire de mise à format, comprenant
- un dispositif de saisie et / ou un capteur pour saisir / détecter une première mesure de longueur pour la première surface de butée longitudinale, et
- un dispositif de saisie et / ou un capteur pour saisir / détecter une deuxième mesure de longueur pour la deuxième surface de butée longitudinale, et
- un dispositif de saisie et / ou un capteur pour saisir / détecter un angle de pivotement d'une réglette à butée selon l'une des revendications précédentes,
**caractérisée par** une réglette à butée (10) selon l'une des revendications précédentes et une commande d'actionneur qui est configurée pour calculer à partir d'une première et d'une deuxième mesure de longueur et de l'angle de pivotement une valeur de correction de longueur et pour commander le premier et le deuxième actionneur de telle manière que la première et la deuxième surface de butée longitudinale soient déplacées le long de la réglette à butée de telle manière que la distance entre la première surface de butée longitudinale et la lame de scie et entre la deuxième surface de butée longitudinale et la lame de scie corresponde à la première ou encore à la deuxième mesure de longueur.

15. Scie circulaire de mise à format selon la revendication précédente, **caractérisée en ce que** le dispositif de saisie est configuré pour détecter une mesure de largeur qui représente une dimension souhaitée ou donnée de la pièce à usiner perpendiculaire à la première et / ou deuxième mesure de longueur, et la commande d'actionneur est configurée pour déterminer une grandeur de correction à partir
- de la mesure de largeur,
- de la première et / ou de la deuxième mesure de longueur, et
- de l'angle de pivotement
et de calculer au moins une valeur de correction pouvant être prédéterminée par l'utilisateur pour la première et / ou la deuxième butée longitudinale et / ou l'angle de pivotement et d'actionner le / les actionneur(s) correspondant(s) pour régler cette valeur de correction.
